# EUROPEAN PATENT APPLICATION

(11) **EP 4 637 239 A1**
(43) Date of publication of application: **22.10.2025**
(21) Application number: 22968365.1
(22) Date of filing: 12.12.2022
(51) Int. Cl.: H04W 72/0453, H04W 24/10, H04W 28/084, H04W 72/541, H04W 88/08, H04W 92/12

(54) **COMMUNICATION SYSTEM, CONTROL DEVICE, RADIO ALLOCATION DEVICE, AND COMMUNICATION METHOD**

(71) Applicant: FUJITSU LIMITED, Kawasaki-shi, Kanagawa 211-8588 (JP)
(72) Inventor: YAMAMOTO Kanta, Kawasaki-shi, Kanagawa 211-8588 (JP); TANAKA Yoshinori, Kawasaki-shi, Kanagawa 211-8588 (JP); SHIMOMURA Tsuyoshi, Kawasaki-shi, Kanagawa 211-8588 (JP); AKIMOTO Yosuke, Kawasaki-shi, Kanagawa 211-8588 (JP)
(74) Representative: Haseltine Lake Kempner LLP
(86) International application number: PCT/JP2022/045644
(87) International publication number: WO 2024/127453

(57) **Abstract**

A communication system configured with an open interface, the communication system includes a radio allocation device configured to allocate radio resources and a control device configured to control the radio allocation device,
wherein the radio allocation device measures a radio state and transmits a measurement result to the control device, the control device divides a bandwidth part (BWP) into a plurality of partitions in accordance with the measurement result, determines a use of each of the divided partitions, and notifies the radio allocation device of BWP partition information regarding the use for each partition of the BWP, and the radio allocation device controls the BWP in a cell subordinate to the radio allocation device in accordance with the BWP partition information.

## Description

### TECHNICAL FIELD

The present invention relates to a communication system, a control device, a radio allocation device, and a communication method.

### BACKGROUND ART

In recent years, Open RAN has gained attention in construction of wireless communication systems. Open RAN is a radio access network (RAN) in which functions of base station devices are separated and is a network constructed based on an open interface specification. The specification of Open RAN has been developed by, for example, O-RAN ALLIANCE that is an industry association. Base stations in Open RAN are divided by function, for example, a central unit (CU), a distributed unit (DU), a radio unit (RU), or the like.

Open RAN may include multiple slices. In such Open RAN, the realization of services on a per-slice basis is promoted by satisfying requirements such as having enhanced mobile broadband (eMBB) and ultra-reliable and low latency communications (URLLC).

However, terminal devices located at cell boundaries are not able to satisfy a low-latency requirement such as URLLC due to inter-cell interference in some cases. Accordingly, interference is curbed by measuring interference states or the like of cells and performing scheduling of radio resources (slices) for URLLC, radio resources (slices) for eMBB, and the like according to a measurement result.

Techniques related to Open RAN are described, for example, in the following CITATION LIST.

### CITATION LIST

### NON-PATENT LITERATURE

Non-Patent Literature 1: 3GPP TS28.541 V18.1.2
Non-Patent Literature 2: O-RAN WG3 Regular meeting (#166) on Nov. 30th, 2022FJT-2022.11.08-WG3-C-proposed_Interference_Control_with_E2SM-CCC-v02.pptx

### SUMMARY OF INVENTION

### PROBLEMS TO BE SOLVED BY THE INVENTION

However, for example, when radio resources are allocated in units of base stations (CU/DU), it is difficult to allocate the radio resources from neighboring cells or in consideration of influences on the neighboring cells. For example, when control devices that centrally control base stations analyze radio states and control the base stations, latency may occur due to a long processing time.

Accordingly, one disclosure provides a communication system, a control device, a radio allocation device, and a communication method capable of appropriately setting slices in an Open RAN communication system.

### MEANS FOR SOLVING THE PROBLEMS

According to an aspect of the embodiments, a communication system configured with an open interface, the communication system includes a radio allocation device configured to allocate radio resources and a control device configured to control the radio allocation device,
wherein the radio allocation device measures a radio state and transmits a measurement result to the control device, the control device divides a bandwidth part (BWP) into a plurality of partitions in accordance with the measurement result, determines a use of each of the divided partitions, and notifies the radio allocation device of BWP part information regarding the use for each partition of the BWP, and the radio allocation device controls the BWP in a cell subordinate to the radio allocation device in accordance with the BWP part information.

### ADVANTAGEOUS EFFECTS OF THE INVENTION

According to one disclosure, it is possible to appropriately set slices in an Open RAN communication system.

### BRIEF DESCRIPTION OF DRAWINGS

FIG. 1 is a diagram illustrating a configuration example of a communication system 10.
FIG. 2 is a diagram illustrating a configuration example of the control device 300 according to a first embodiment.
FIG. 3 is a diagram illustrating a configuration example of the CU/DU 200 according to the first embodiment.
FIG. 4 is a diagram illustrating an example of a configuration of the communication system 10 in the O-RAN architecture.
FIG. 5 is a diagram illustrating an example of an E2 interface.
FIG. 6 is a diagram illustrating examples of information elements of the E2 interface.
FIG. 7 is a diagram illustrating an example of a sequence for notification of an extension information element.
FIG. 8 is a diagram illustrating a configuration example of the control device 300 in the second embodiment.
FIG. 9 is a diagram illustrating a configuration example of the CU/DU 200 according to the second embodiment.
FIG. 10 is a diagram illustrating examples of information elements of the E2 interface in the second embodiment.

### DESCRIPTION OF EMBODIMENTS

Hereinafter, the present embodiment will be described in detail with reference to the drawings. Problems and examples in the present specification are merely exemplary and do not limit the claims of the present application. In particular, the technique of the present application can be applied to even different expressions as long as the expressions are technically equivalent even if the expressions are different, and the claims are not limited.

Names and functions of devices, nodes, functions, protocols, entities, signaling, messages, parameters, and the like in embodiments are merely exemplary and may be different names or different functions. For example, when radio resources are allocated in units of base stations (CU/DU), it is difficult to allocate the radio resources from neighboring cells or in consideration of influences on the neighboring cells. For example, when control devices that centrally control base stations analyze radio states and control the base stations, latency may occur due to a long processing time.

### [First Embodiment]

### <Configuration Example of Communication System 10>

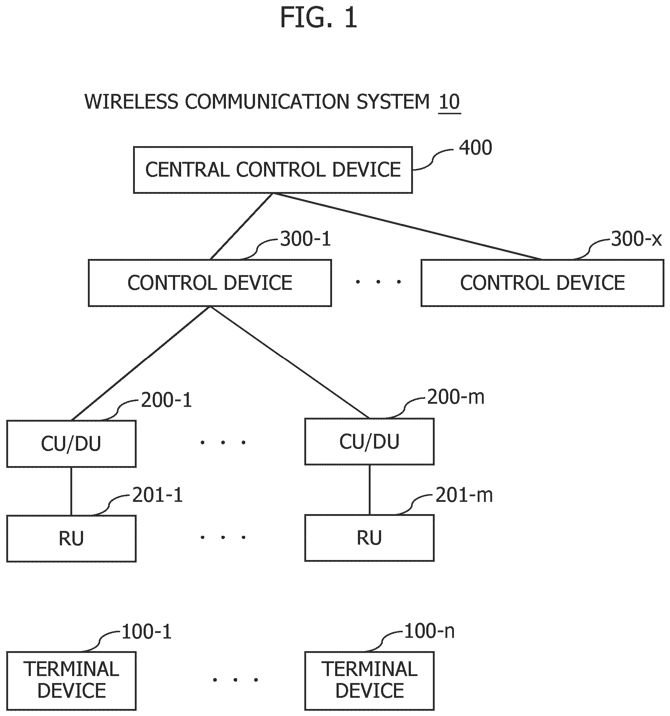

FIG. 1 is a diagram illustrating a configuration example of a communication system 10. The communication system 10 is a wireless communication system compatible with Open RAN. The communication system 10 includes a central control device 400, control devices 300-1 to 300-x (hereinafter referred to as control devices 300), CUs/DUs 200-1 to 200-m (hereinafter referred to as CUs/DUs 200), RUs 201-1 to 201-m (hereinafter referred to as RUs 201), and terminal devices 100-1 to 100-n (hereinafter referred to as terminal devices 100).

The terminal device 100 is a device that wirelessly communicates with other communication devices and is, for example, a smartphone or a tablet terminal. The terminal device 100 performs communication that has a request condition such as URLLC or eMBB and utilizes a service.

The RU 201 is a device that transmits and receives radio signals. The RU 201 forms a cell according to, for example, a transmission output and reception sensitivity. The RU 201 performs wireless communication with the terminal device 100 located in the own cell. The RU 201 transmits and receives radio signals in accordance with a controlled timing of the CU/DU 200. The RU 201 transmits a received radio signal to the CU/DU 200, and transmits a signal (for example, a signal transmitted from another communication device as a radio signal to the terminal device 100) received from the CU/DU 200 to the terminal device 100.

The CU/DU 200 is a device that performs baseband processing and performs, for example, allocation control for radio resources and control of the RU 201. The CU is, for example, a radio management device that manages radio resources. The DU is, for example, a radio allocation device that allocates radio resources. The CU/DU 200 is a device that has one or both of functions of the CU and the DU. The CU/DU 200 is connected to the control device 300 to perform communication. The CU/DU 200 acquires information regarding the BWP from the control device 300 and determines a bandwidth part (BWP) and a slice configuration of each cell in the subordinate RU 201 in response to an instruction of the control device 300. The CU/DU 200 is one device in FIG. 1, but the CU and the DU may be different devices.

The control device 300 is a device that controls the CU/DU 200 and is, for example, a server machine. The control device 300 instructs and controls the configuration of the BWP and the slice configuration for the CU/DU 200.

The central control device 400 is a device that controls the control device 300 and is, for example, a server machine. For example, the central control device 400 communicates with a plurality of control devices 300 and controls each control device 300.

### <Configuration Example of Control Device 300>

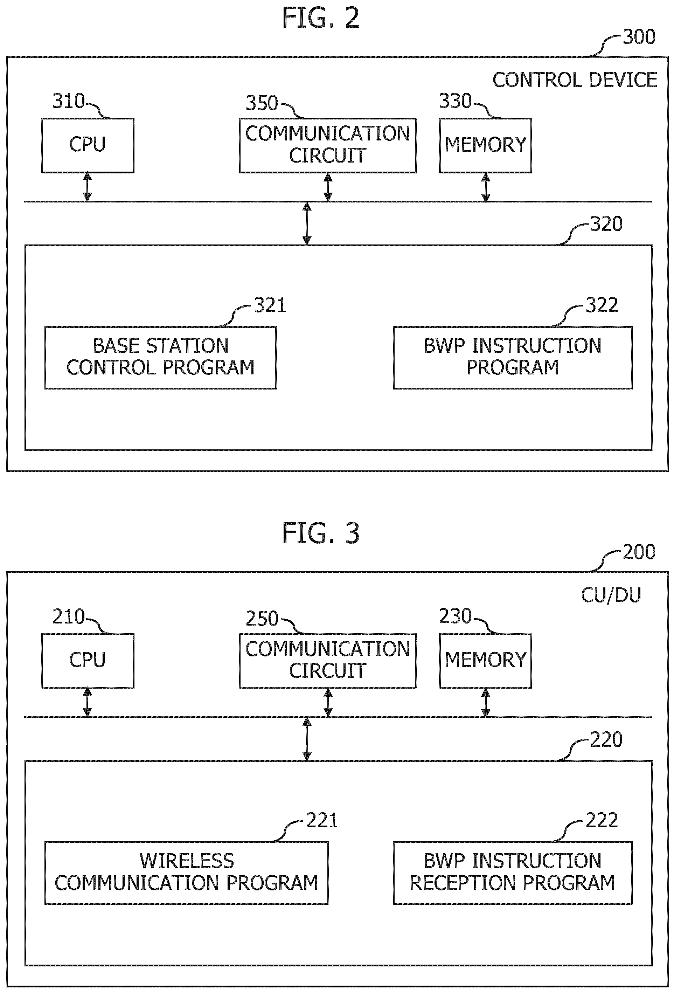

FIG. 2 is a diagram illustrating a configuration example of the control device 300 according to a first embodiment. The control device 300 includes a central processing unit (CPU) 310, a storage 320, a memory 330, and a communication circuit 350.

The storage 320 is an auxiliary storage device such as a flash memory, a hard disk drive (HDD), or a solid state drive (SSD) that stores programs and data. The storage 320 stores a base station control program 321 and a BWP instruction program 322.

The memory 330 is an area where a program stored in the storage 320 is loaded. The memory 330 may also be used as an area where a program stores data.

The communication circuit 350 is a communication device that is connected to the CU/DU 200 and the central control device 400 to perform communication. While there is one communication circuit 350 in FIG. 2, there may be a plurality of communication circuits depending on, for example, an interface between devices or the number of devices to be connected.

The CPU 310 is a processor that loads a program stored in the storage 320 on the memory 330, executes the loaded program, constructs each unit, and implements each processing.

The CPU 310 executes the base station control program 321 to construct a controller and a communicator and perform base station control processing. The base station control processing is, for example, processing for implementing communication of the terminal device 100 by controlling the CU/DU 200. The base station processing includes implementation of communication of the terminal device 100 via the CU/DU 200 and allocation control of radio resources to the CU/DU 200.

The CPU 310 executes the BWP instruction program 322 to construct a controller and a communicator and performs BWP instruction processing. The BWP instruction processing is, for example, processing for instructing the CU/DU 200 to configure a BWP for each cell. The BWP instruction processing includes, for example, processing for designating a radio resource for each slice within a single BWP. In the BWP instruction processing, for example, the control device 300 can give an instruction for the radio resource for each slice in the BWP on a resource block (RB) basis.

### <Configuration Example of CU/DU 200>

FIG. 3 is a diagram illustrating a configuration example of the CU/DU 200 according to the first embodiment. The CU/DU 200 includes a CPU 210, a storage 220, a memory 230, and a communication circuit 250.

The storage 220 is an auxiliary storage device such as a flash memory, an HDD, or an SSD that stores programs and data. The storage 220 stores a wireless communication program 221 and a BWP instruction reception program 222.

The memory 230 is an area where a program stored in the storage 220 is loaded. The memory 230 may also be used as an area where a program stores data.

The communication circuit 250 is a communication device that is connected to the RU 201 or the control device 300 to perform communication. While there is one communication circuit 250 in FIG. 3, there may be a plurality of communication circuits depending on, for example, an interface between devices or the number of devices to be connected.

The CPU 210 is a processor that loads a program stored in the storage 220 into the memory 230, executes the loaded program, constructs each unit, and implements each processing.

The CPU 210 executes the wireless communication program 221 to construct a second communicator and a second controller to perform wireless communication processing. The wireless communication processing is, for example, processing for controlling wireless communication of the terminal device 100 via the RU 201 in accordance with an instruction from the control device 300.

The CPU 210 executes the BWP instruction reception program 222 to construct the second controller and the second communicator and perform the BWP instruction reception processing. The BWP instruction reception processing is, for example, processing for receiving an instruction of a BWP configuration for each cell from the control device 300. The BWP instruction reception processing includes, for example, processing for implementing a radio resource for each slice according to designated content within a single BWP. The CU/DU 200 controls the RU 201 such that the BWP is instructed in the BWP instruction reception processing.

### <Configuration Example of Communication System 10 in O-RAN Architecture>

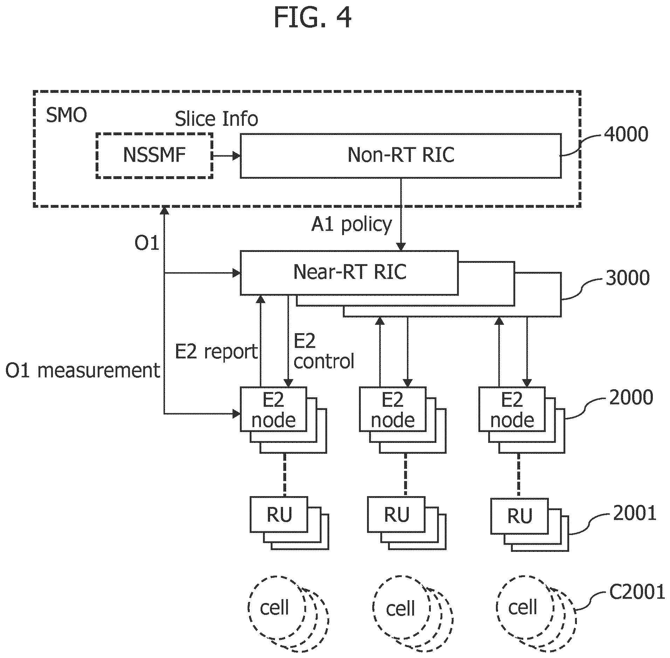

FIG. 4 is a diagram illustrating an example of a configuration of the communication system 10 in the O-RAN architecture. O-RAN indicates a specification formulated in O-RAN ALLIANCE. Details of a configuration example of the O-RAN architecture are described in an unusual book "O-RAN WG3 Regular meeting (#166) on Nov. 30th, 2022(FJT-2022.11.08-WG3-C-proposed_Interference_Control_with_E2SM-CCC-v02.pptx)".

A non-RT RIC 4000 performs generation and notification of a policy related to control of Open RAN. A non-real time (RT) RIC (RAN intelligent controller) 4000 is constructed in a service management and orchestration (SMO) that performs maintenance and orchestration of Open RAN. The non-RT RIC 4000 is constructed, for example in the central control device 400.

A near-RT RIC 3000 is installed near an E2 node and performs radio resource control such as BWP. The near-RT RIC 3000 is constructed, for example, in the control device 300.

An E2 node 2000 is a device controlled by the near-RT RIC 3000 by an E2 interface. The E2 node 2000 connects with an RU 2001 that constructs a cell C2001 and controls radio resources (BWP) for an RU 2001. The E2 node 2000 is, for example, a CU/DU 200.

Communication is performed between the near-RT RIC 3000 and the E2 node 2000 via the E2 interface. E2 control which is a control-system message transmitted from the near-RT RIC 3000 to the E2 node 2000 includes, for example, information regarding radio resources and a BWP instruction. An E2 report which is a report message transmitted from the near-RT RIC 3000 from the E2 node 2000 includes, for example, measurement information such as reception power and a frame error rate.

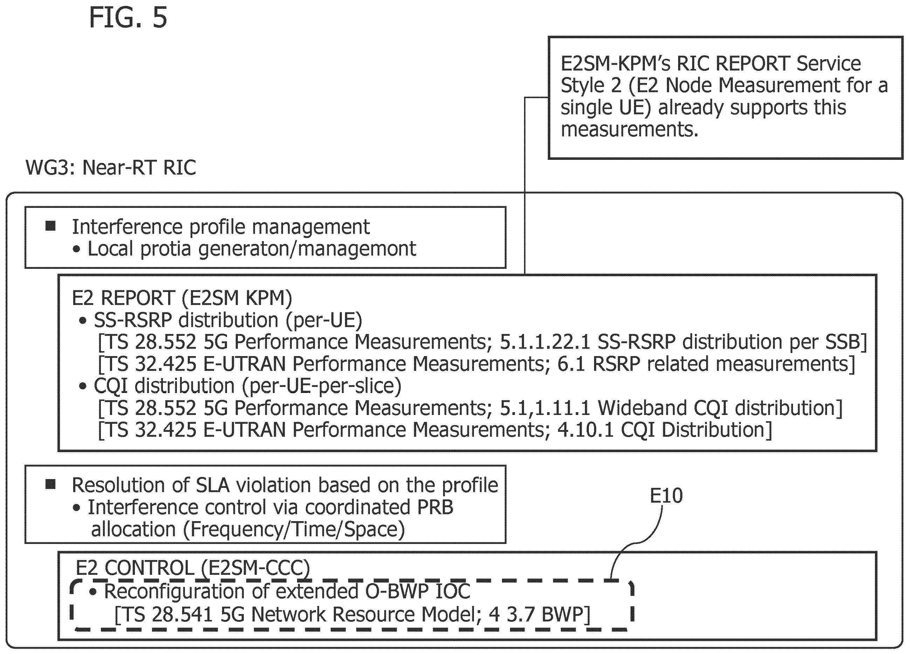

FIG. 5 is a diagram illustrating an example of an E2 interface. In the first embodiment, an information element included in the E2 control is extended. In the first embodiment, an extension information element E10 is newly defined. The extension information element E10 is an extension model of the BWP for O-RAN.

### < Extension Information Element>

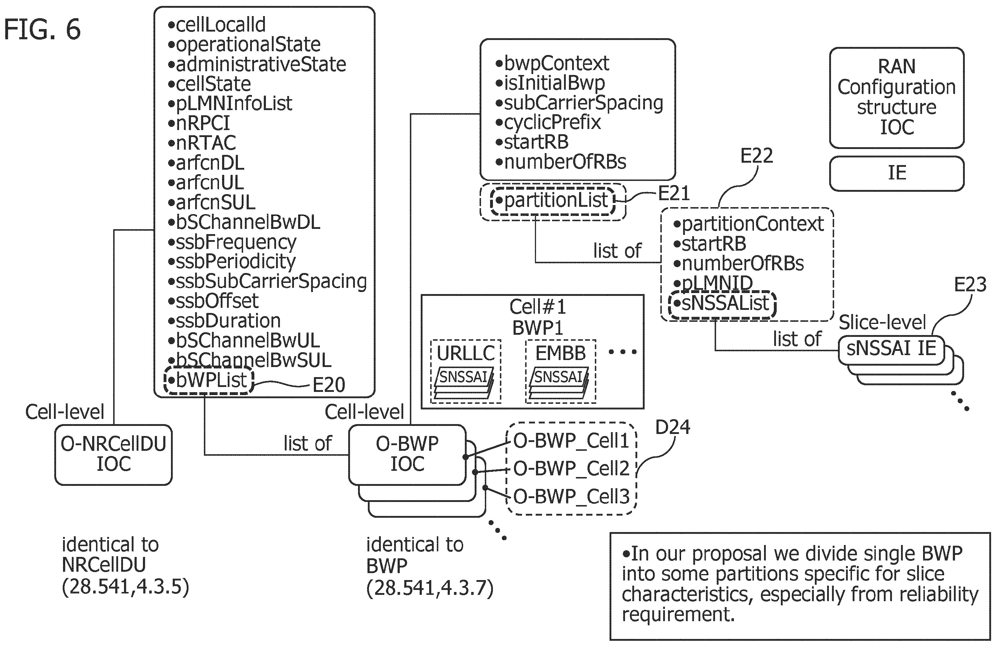

FIG. 6 is a diagram illustrating examples of information elements of the E2 interface. Details of information elements other than the extension information element can be referred to in O-RAN.WG3.E2SM-CCC-v01.01, 8.8.2.2 Chapter O-NRCellDU, 8.8.2.3 Chapter O-BWP.

In the information element of an interface according to the first embodiment, partitionList (E21) is added to BWP IOC of bWPList (E20). Accordingly, a frequency use section can be formed within a single BWP. partitionList has following information elements (E22):
· partitionContext: context of partition
· startRB: RB number of allocation head
· numberOfRBs: the number of allocated RBs
· PLMNID: identifier of PLMN (operator identifier)
· sNSSAIList: sNSSAI IE list

sNSSAIList has an sNSSAI IE (E23). sNSSAI is an identifier of a slice instance such as Single-Network Slice Selection Assistance Information.

one BWP can be divided on an RB basis by defining the extension information element in this way.

Since the BWP can be divided on the RB basis, the BWP IOC is, for example, on a cell basis (O-BWP_CELLy: y is an integer). The information element included in the information element (E22) is an example of the BWP partition information.

### <Extension Information Element Notification Sequence>

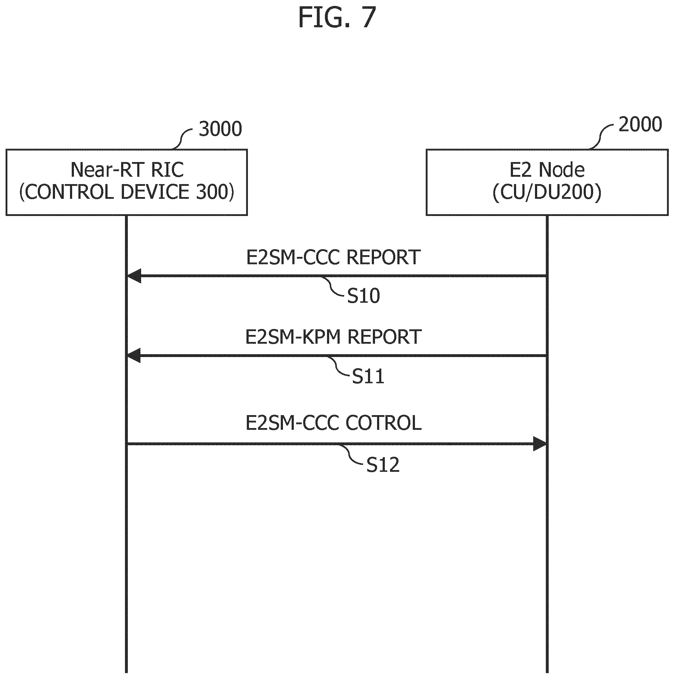

FIG. 7 is a diagram illustrating an example of a sequence for notification of an extension information element. The E2 node 2000 in O-RAN is, for example, a DU.

The E2 node 2000 transmits an E2SM-CCC REPORT to the near-RT RIC 3000 (S10). E2SM-CCC REPORT is a type of E2 report and includes, for example, content of a BWP autonomously set by a base station (such as a CU/DU).

The E2 node 2000 transmits E2SM-KMP REPORT to the near-RT RIC 3000 (S11). E2SM-CCC REPORT is a type of E2 report and includes, for example, a measurement result of a base station (such as a CU/DU). A measurement result includes, for example, reception power (RSRP), an error rate, and reliability.

When E2SM-CCC REPORT is received, the near-RT RIC 3000 transmits the E2SM-CCC CONTROL (S12). E2SM-CCC CONTROL is a type of E2 control and includes, for example, BWP instruction information. The BWP instruction information includes an extension information element.

The near-RT RIC 3000 divides the BWP on the RB basis in accordance with the received measurement result and allocates the BWP for each requirement condition (use) (for example, for URLLC, eMBB, or the like). For example, when the BWP is formed 20 RBs, RBs 1 to 3 of the BWP are allocated for each use such as use for the URLLC, RBs 6 to 20 are allocated for each use such as use for the eMBB, or the like.

When the allocation of the radio resources in the BWP is determined, the near-RT RIC 3000 determines allocation in consideration of inter-cell interference. For example, when the cell 1 and the cell 2 affect each other in URLLC (for example, interference of a predetermined level or more occurs), radio resources for URLLC of the cell 1 and the cell 2 are allocated so that the radio resources do not overlap each other.

The E2 node 2000 divides the BWP in accordance with the extension information element and sets, for example, a radio resource for URLLC, a radio resource for eMBB, or the like in one BWP.

Control of the D-FER is less responsive to a field event because there is no time definition of feedback from information collection to analysis and control, and there is no consideration for processing acceleration. In the first embodiment, conversely, since the BWP can be partitioned, responsiveness to a field event is enhanced.

When the configuration of the BWP in operation is changed, signaling for BWP switching with the terminal device 100 occurs whenever the interference control is performed, and thus radio efficiency deteriorates. In the first embodiment, conversely, since the BWP can be partitioned, the occurrence of signaling between the terminal devices 100 can be prevented and the deterioration in radio efficiency can be prevented.

### [Second Embodiment]

In the first embodiment, an example in which a frequency use section is formed within a single BWP has been described. In a second embodiment, an example in which a frequency use section is formed in an entire available band will be described. In the second embodiment, a wireless communication system is similar to that of the first embodiment, and thus description thereof will be omitted.

### <Configuration Example of Control Device 300>

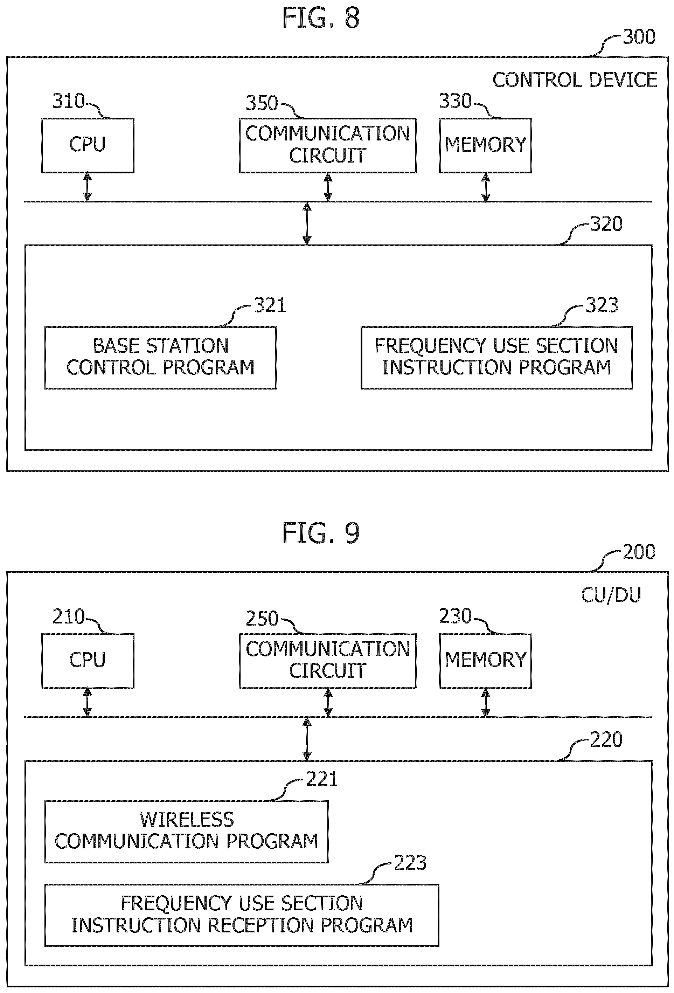

FIG. 8 is a diagram illustrating a configuration example of the control device 300 in the second embodiment. In FIG. 8, description of the same content as the content in FIG. 2 will be omitted. The storage 320 stores the base station control program 321 and a frequency use section instruction program 323.

The CPU 310 executes the frequency use section instruction program 323 to construct a controller and a communicator and perform frequency use section instruction processing. The frequency use section instruction processing is, for example, processing for instructing the CU/DU 200 to configure a frequency use section. The frequency use section instruction processing includes, for example, processing for forming and indicating a frequency use section in a band including at least a part or all of the entire available band regardless of the configuration of the BWP. In the frequency use section instruction processing, for example, the control device 300 can give an instruction for an available frequency on the resource block (RB) basis.

### <Configuration Example of CU/DU 200>

FIG. 9 is a diagram illustrating a configuration example of the CU/DU 200 according to the second embodiment. In FIG. 9, the description of the same content as the content in FIG. 3 will be omitted. The storage 220 stores the wireless communication program 221 and a frequency use section instruction reception program 223.

The CPU 210 constructs the second controller and the second communicator and performs the frequency use section instruction processing by executing the frequency use section instruction reception program 223. The frequency use section instruction reception processing is, for example, processing for receiving an instruction to configure the frequency use section from the control device 300. The frequency use section instruction reception processing includes, for example, processing for implementing a frequency use section designated in a band formed by at least a part or all of the available band regardless of the configuration of the BWP. The CU/DU 200 controls the RU 201 such that the CU/DU 200 has a configuration in which the frequency is instructed in the frequency use section instruction reception processing.

### < Extension Information Element>

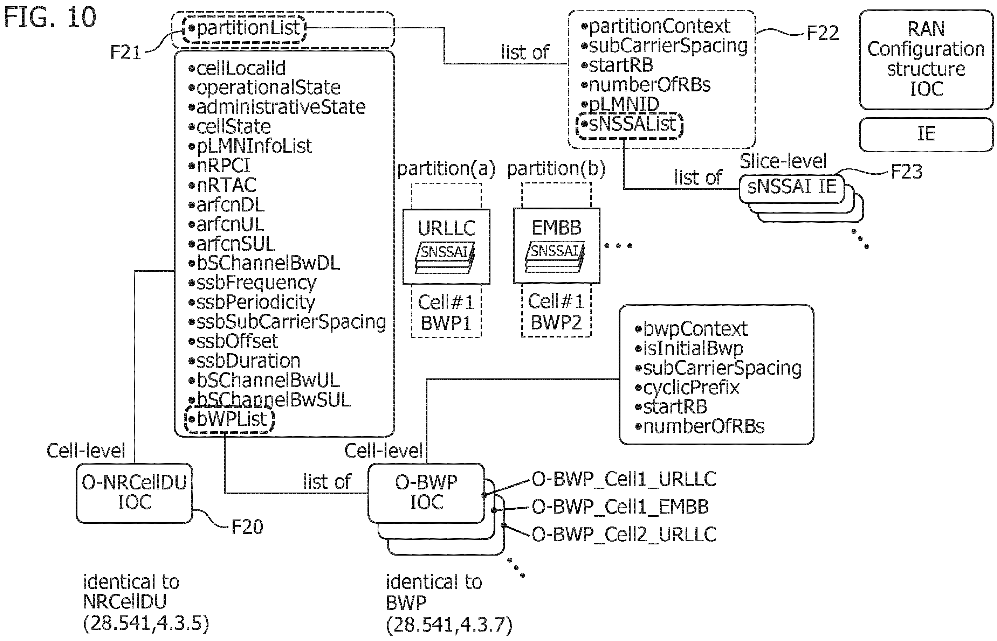

FIG. 10 is a diagram illustrating examples of information elements of the E2 interface in the second embodiment. Details of the information elements other than the extension information element can be referred to in O-RAN.WG3.E2SM-CCC-v01.01, 8.8.2.2 Chapter O-NRCellDU, 8.8.2.3 Chapter O-BWP.

In the second embodiment, partitionList (F20) is added to O-NRCellDU IOC (F21). Accordingly, it is possible to form a frequency use section regardless of the BWP configuration in the entire band. partitionList has the following information elements (F22):
· partitionContext: context of partition
· subCarrierSpacing: subcarrier spacing
· startRB: RB number of allocation head
· numberOfRBs: the number of allocated RBs
· PLMNID: identifier of PLMN (operator identifier)
· sNSSAIList: sNSSAI IE list

sNSSAIList has an sNSSAI IE (F23). sNSSAI is an identifier of a slice instance such as Single-Network Slice Selection Assistance Information. The information element included in the information element (F22) is an example of the frequency use section information. The frequency use section in the entire band regardless of the BWP configuration can be formed by defining the extension information element in this way. Accordingly, PRB allocation control is enabled for the purpose of interference control regardless of whether the BWP is used. When the BWP is configured for each slice, the BWP can be configured in the frequency section in response to a slice reliability request. A sequence for notification of the extension information element is similar to the sequence in FIG. 7. Then, the frequency use section instruction information is included in E2SM-CCC CONTROL transmitted in step S12 in FIG. 7. The frequency use section instruction information includes an extension information element.

As described above, the E2 node 2000 can partition an available frequency regardless of the BWP according to the extension information element and set, for example, a radio resource for URLLC, a radio resource for eMBB, or the like within the available frequency.

In the second embodiment, similarly to the first embodiment, the responsiveness to the field event is enhanced. In the second embodiment, similarly to the first embodiment, it is possible to prevent occurrence of signaling between the terminal devices 100 and to prevent deterioration in radio efficiency.

### [Other Embodiments]

O-RAN is an example of Open RAN, and the extension information elements in the first and second embodiments may be applied to Open RANs other than R-RAN.

The name of the extension information element is exemplary, and the present invention is not limited thereto.

Furthermore, the extension information element only needs to be able to partition one BWP (can instruct the partition), and may not be in the form of the information element in the first embodiment and the second embodiment.

The first and second embodiments may be combined within a scope in which there is no contradiction.

### REFERENCE SIGNS LIST

- 10 :: COMMUNICATION SYSTEM
- 100:: TERMINAL DEVICE
- 200:: CP/DU
- 210:: CPU
- 220:: STORAGE
- 221:: WIRELESS COMMUNICATION PROGRAM
- 222:: BWP INSTRUCTION RECEPTION PROGRAM
- 223:: FREQUENCY USE SECTION INSTRUCTION RECEPTION PROGRAM
- 230:: MEMORY
- 250:: COMMUNICATION CIRCUIT
- 300:: CONTROL DEVICE
- 310:: CPU
- 320:: STORAGE
- 321:: BASE STATION CONTROL PROGRAM
- 322:: BWP INSTRUCTION PROGRAM
- 323:: FREQUENCY USE SECTION INSTRUCTION PROGRAM
- 330:: MEMORY
- 350:: COMMUNICATION CIRCUIT
- 400:: CENTRAL CONTROL DEVICE

## Claims

1. A communication system configured with an open interface, the communication system comprising:
a radio allocation device configured to allocate radio resources; and
a control device configured to control the radio allocation device,
wherein the radio allocation device measures a radio state and transmits a measurement result to the control device,
the control device divides a bandwidth part (BWP) into a plurality of partitions in accordance with the measurement result, determines a use of each of the divided partitions, and notifies the radio allocation device of BWP part information regarding the use for each partition of the BWP, and
the radio allocation device controls the BWP in a cell subordinate to the radio allocation device in accordance with the BWP partition information.

2. The communication system according to claim 1, wherein the control device determines the use of each of the partitions for each cell in consideration of interference between the cells in the use.

3. The communication system according to claim 1,
wherein the control device divides the BWP on a resource block basis, and
wherein the BWP part information includes information regarding a resource block number.

4. A communication method in a communication system that is configured with an open interface and includes a radio allocation device allocating radio resources and a control device controlling the radio allocation device, the communication method comprising:
measuring a radio state and transmitting a measurement result to the control device by the radio allocation device;
dividing a bandwidth part (BWP) into a plurality of partitions in accordance with the measurement result, determining a use of each of the divided partitions, and notifying the radio allocation device of BWP partition information regarding the use for each partition of the BWP by the control device; and
controlling the BWP in a cell subordinate to the radio allocation device in accordance with the BWP partition information by the radio allocation device.

5. A control device of a communication system that is configured with an open interface and includes a radio allocation device allocating radio resources and the control device controlling the radio allocation device, the control device comprising:
a receptor configured to receive a measurement result obtained by the radio allocation device measuring a radio state; and
a controller configured to divide a bandwidth part (BWP) into a plurality of partitions in accordance with the measurement result, determine a use of each of the divided partitions, and notify the radio allocation device of BWP partition information regarding the use for each partition of the BWP.

6. A radio allocation device of a communication system that is configured with an open interface and includes a radio allocation device allocating radio resources and the control device controlling the radio allocation device, the radio allocation device comprising:
a transmitter configured to measure a radio state and transmit a measurement result to the control device; and
a second controller configured to receive bandwidth part (BWP) information regarding a use for each partition of the BWP divided into a plurality of partitions and determined in accordance with the measurement result by the control device, and control the BWP in a cell subordinate to the radio allocation device in accordance with the BWP partition information.

7. A communication system configured with an open interface, the communication system comprising:
a radio allocation device configured to allocate radio resources; and
a control device configured to control the radio allocation device,
wherein the radio allocation device measures a radio state and transmits a measurement result to the control device,
the control device divides an available frequency into a plurality of partitions in accordance with the measurement result, determines a use of each of the divided partitions, and notifies the radio allocation device of frequency partition information regarding a use of each of the divided partitions, and
the radio allocation device controls a frequency use section in a cell subordinate to the radio allocation device in accordance with the frequency partition information.
